# EUROPEAN PATENT APPLICATION

(11) **EP 4 793 510 A1**
(43) Date of publication of application: **19.08.2026**
(21) Application number: 25876057.8
(22) Date of filing: 21.08.2025
(51) Int. Cl.: F04D 25/16, F04D 25/08, F04D 29/26, F04D 29/40, B60N 2/56

(54) **STACKED FAN STRUCTURE, COMBINED PADDLE-BLADE INTEGRATED FAN, AND AUTOMOBILE SEAT VENTILATION SYSTEM**

(30) Priority: 13.12.2024 CN 202411842335; 13.12.2024 CN 202411842332; 13.12.2024 CN 202411842424; 13.02.2025 CN 202510161415
(71) Applicant: AEW TECHNOLOGY GROUP CO., LTD., Langfang, Hebei 065000 (CN)
(72) Inventor: ZHANG, Haitao, Langfang, Hebei 065000 (CN); ZHU, Jiale, Songjiang District (CN)
(74) Representative: Vogelbruch, Keang
(86) International application number: PCT/CN2025/116188
(87) International publication number: WO 2026/123770

(57) **Abstract**

The present application provides a stacked fan structure, a combined blade-integrated fan and an automotive seat ventilation system, relating to the technical field of fans. The stacked fan structure and the combined blade-integrated fan provided by the present application integrally mount two fan assemblies together and control the two fan assemblies to operate separately, thereby achieving the effect of switching a single air opening between air suction mode and the air blowing mode. The above approach features a simple internal structural design and is less prone to air leakage. Meanwhile, no additional switching motor is required, which reduces the space occupied by motor mounting and lowers the overall weight of the structure. Furthermore, sufficient gas flow is provided, thereby producing a favorable ventilation effect.

## Description

### CROSS-REFERENCE TO RELATED APPLICATIONS

This application claims the priority of the Chinese Patent Application No. 2024118424242, entitled "STACKED FAN STRUCTURE FOR AIR BLOWING AND SUCTION SYSTEM OF SEAT", filed with the China National Intellectual Property Administration on December 13, 2024; the Chinese Patent Application No. 2025101614155, entitled "COMBINED BLADE-INTEGRATED FAN WITH BIDIRECTIONAL ASYMMETRIC IMPELLERS AND AUTOMOTIVE SEAT VENTILATION SYSTEM", filed with the China National Intellectual Property Administration on February 13, 2025; the Chinese Patent Application No. 2024118423358, entitled "DOUBLE-SIDED INDEPENDENT SEPARATELY-DRIVEN FAN", filed with the China National Intellectual Property Administration on December 13, 2024; and the Chinese Patent Application No. 2024118423324, entitled "ULTRA-THIN DOUBLE-SIDED INDEPENDENT SEPARATELY-DRIVEN FAN FOR SEAT VENTILATION", filed with the China National Intellectual Property Administration on December 13, 2024, the entire contents of which are incorporated into this application by reference.

### TECHNICAL FIELD

The present application relates generally to the technical field of fans, and particularly to a stacked fan structure, a combined blade-integrated fan and an automotive seat ventilation system.

### BACKGROUND

Existing automotive seats are equipped with ventilation systems, which typically have fan structures with both air blowing and suction functions to meet diverse usage requirements.

To realize the air blowing and suction functions, existing fan structures are provided with multiple air openings, serving as the air input and output for air suction operation and the air input and output for air blowing operation, respectively. An air blocking structure is additionally provided, and the air blocking structure is controlled to switch states so as to individually block the air inlet or the air outlet, thereby placing the fan structure in an air suction or air blowing mode.

However, the design of the air blocking structure is relatively complex, and air leakage due to poor sealing is prone to occur. Moreover, controlling the state switching of the air blocking structure requires an additionally mounted control motor, which on one hand occupies space and increases the total weight of the fan structure, and on the other hand leads to an air flow rate reduction due to the space occupied, resulting in an unsatisfactory ventilation effect.

### SUMMARY

In a first aspect, the objective of the present application is to provide a stacked fan structure that is less prone to air leakage, and that eliminates the need for an additional switching motor, thereby reducing the space occupied for motor mounting and lowering the overall weight of the structure.

In a second aspect, the objective of the present application is to provide a combined blade-integrated fan with bidirectional asymmetric impellers that is less susceptible to air leakage, thus ensuring a sufficient air flow rate and further delivering an excellent ventilation effect.

Embodiments of the present application may be achieved as follows:

In a first aspect, the present application provides a stacked fan structure, including
a first fan assembly, wherein the first fan assembly is provided with a first air opening and has a first space in an interior of the first fan assembly , and the first space is in communication with the first air opening;
a second fan assembly, wherein the second fan assembly is provided with a second air opening and has a second space in an interior of the second fan assembly, and the second space is in communication with the second air opening;
wherein the first fan assembly and the second fan assembly are connected to each other, and the first space is in communication with the second space;
when the first fan assembly operates actively and the second fan assembly is not active (not operating), the second air opening serves as an air suction opening and the first air opening serves as an air blowing opening, and the air (gas) flows sequentially through the second air opening, the second space, the first space and the first air opening;
when the second fan assembly operates actively and the first fan assembly is not active, the first air opening serves as an air suction opening and the second air opening serves as an air blowing opening, and the air flows sequentially through the first air opening, the first space, the second space and the second air opening.

Optionally, the first fan assembly includes a first housing and a second housing, and the first space is formed between the first housing and the second housing;
the second fan assembly includes a third housing and a fourth housing, and the second space is formed between the third housing and the fourth housing;
the second housing and the third housing are connected by a connecting structure;
a first communication hole is provided in each of a side of the second housing near the third housing and a side of the third housing near the second housing, and the connecting structure communicates the two first communication holes and is configured to communicate the first space with the second space.

Optionally, the connecting structure includes a communication tube, and the communication tube communicates the first space with the second space.

Optionally, the first fan assembly includes a fifth housing, and the second fan assembly includes a seventh housing;
a sixth housing is mounted between the fifth housing and the seventh housing, the first space is formed between the sixth housing and the fifth housing, the second space is formed between the sixth housing and the seventh housing, a second communication hole is formed in the sixth housing and configured to communicate the first space with the second space.

Optionally, connecting members are mounted between the sixth housing and each of the first fan assembly and the second fan assembly, and are configured to fix the first fan assembly, the second fan assembly and the sixth housing.

Optionally, a first protruding portion is provided on the sixth housing, wherein the diameter of the fifth housing is larger than that of the seventh housing, and the diameter of the first protruding portion is greater than or equal to that of the fifth housing, wherein a connecting space is defined between the first protruding portion and the fifth housing, which is configured to connect with an air guide layer.

Optionally, the connecting structure includes a sealing ring and a fixing structure, wherein the first fan assembly and the second fan assembly are fixed to each other by the fixing structure, and the gap between the first fan assembly and the second fan assembly is sealed by the sealing ring.

Optionally, the first fan assembly includes a first impeller, and the second fan assembly includes a second impeller, wherein the first impeller and the second impeller each include fan blades, and at least one of the dimensions of the first impeller and the second impeller, and the lengths, thicknesses and inclination angles of the fan blades on the first impeller and the second impeller is different.

Optionally, the first fan assembly and the second fan assembly share a circuit board.

Optionally, the stator of the first fan assembly and the stator of the second fan assembly are arranged in a staggered manner.

In a second aspect, the present application provides a combined blade-integrated fan with bidirectional asymmetric impellers, configured for a ventilation system of an automotive seat, including
a housing assembly, wherein the housing assembly defines a first space and a second space in communication with each other in an interior of the housing assembly, the housing assembly is provided with a first air exchange opening and a second air exchange opening, the first space is in communication with the first air exchange opening, and the second space is in communication with the second air exchange opening;
a first blade fan assembly and a second blade fan assembly, wherein the first blade fan assembly is mounted in the first space, the second blade fan assembly is mounted in the second space, and the first blade fan assembly and the second blade fan assembly each operate independently;
wherein, when the first blade fan assembly operates actively, gas flows from a side of the automotive seat near an occupant, through the second air exchange opening, the second space, the first space and the first air exchange opening, to a side of the automotive seat away from the occupant;
when the second blade fan assembly operates actively, gas flows from the side of the automotive seat away from an occupant, through the first air exchange opening, the first space, the second space and the second air exchange opening, to the side of the automotive seat near the occupant;
wherein the first blade fan assembly includes a first impeller, the second blade fan assembly includes a second impeller;
the first impeller and the second impeller have different thicknesses along a direction in which rotating shafts of the first impeller and the second impeller extend.

Optionally, the thickness of the first impeller along the direction in which the rotating shaft of the first impeller extends is greater than that of the second impeller along the direction in which the rotating shaft of the second impeller extends.

Optionally, a length of the first impeller in a direction perpendicular to the rotating shaft of the first impeller is smaller than that of the second impeller in a direction perpendicular to its rotating shaft of the second impeller.

Optionally, both the second impeller and the first impeller are of a blade centrifugal structure, and the second impeller and the first impeller drive air to move in opposite directions when rotating, and both the second air exchange opening and the first air exchange opening are located at the side wall of the housing assembly.

Optionally, the housing assembly includes:
an upper housing, a middle housing and a lower housing that are connected to each other, wherein the first space is defined between the upper housing and the middle housing, and the second space is defined between the middle housing and the lower housing.

Optionally, a second protruding portion is provided on an outer side wall of the middle housing, and the second protruding portion is configured to connect with a support layer to fix the relative position between the housing assembly and the support layer.

Optionally, the diameter of the lower housing is larger than that of the upper housing, and the diameter of the second protruding portion is greater than or equal to that of the lower housing, the connecting space is formed between the second protruding portion and the lower housing and configured to connect with an air guide layer to fix the relative position between the housing assembly and the air guide layer.

In another aspect, the present application also provides an automotive seat ventilation system, including:
the combined blade-integrated fan with bidirectional asymmetric impellers according to any one of the above;
a support layer configured to communicate the space on the side near the occupant and the space on the side away from the occupant, wherein an air guide portion is arranged on the side of the support layer away from the occupant, the housing assembly is connected with the air guide portion, and the second air exchange opening is in communication with the internal space of the air guide portion.

Optionally, the air guide portion includes an air guide layer and an air bag film, with the air bag film covering the air guide layer, wherein a mounting groove is formed in the air guide layer, the housing assembly is disposed in the mounting groove, and the second air exchange opening is in communication with the internal space of the air guide layer, wherein a ventilation hole is provided on the side of the air bag film near the support layer, and the ventilation hole is in corresponding communication with the ventilation air duct, and wherein a first mounting hole is provided on the side of the air bag film away from the support layer, the first mounting hole corresponding to the mounting groove and being configured to accommodate the housing assembly.

Optionally, the air guide portion includes an air guide groove, the air guide groove being in communication with the ventilation air duct, wherein a sealing layer is provided on a side of the air guide groove away from the support layer, and a second mounting hole is formed in the sealing layer, and wherein the housing assembly passes through the second mounting hole and is disposed in the air guide groove, and the second air exchange opening is in communication with an internal space formed by the air guide groove and the sealing layer.

The beneficial effects of the present application are as follows:
In the first aspect, the stacked fan structure proposed by the present application integrally mounts two fan assemblies together, where each of the two fan assemblies is provided with an air opening and an internal space, and the internal spaces of the two fan assemblies are in communication with each other. When one of the fan assemblies operates, the air opening of this fan assembly serves as an air blowing opening, and the air opening of the other fan assembly serves as an air suction opening. The two fan assemblies are controlled to operate separately to achieve the effect of switching a single air opening between the air suction mode and the air blowing mode. The above-mentioned method features a simple internal structural design and is not prone to air leakage; meanwhile, no additional switching motor is required, which reduces the space occupied for motor mounting and also lowers the overall weight of the structure.

In the second aspect, the present application provides the combined blade-integrated fan with bidirectional asymmetric impellers, wherein a fan housing is mounted on an automobile seat, and the housing has a first space, a second space, a second air exchange opening and a first air exchange opening that are in communication with each other inside. A first blade fan assembly is mounted in the first space, and a second blade fan assembly is mounted in the second space, wherein the first impeller and the second impeller are arranged coaxially and in opposite directions. Therefore, during operation, both the air suction function and air blowing function can be achieved by controlling the first blade fan assembly and the second blade fan assembly to operate separately, with a simple structure facilitating convenient control. Since there is only one path for gas to flow through, air leakage is not prone to occur, thus ensuring a sufficient gas flow rate and further achieving an excellent ventilation effect.

### BRIEF DESCRIPTION OF DRAWINGS

Other features, objectives and advantages of the present application will become more apparent from the detailed description of the non-limiting embodiments made with reference to the drawings below:
Fig. 1 is a schematic view showing a fan structure in one embodiment;
Fig. 2 is a sectional view showing the first fan assembly in operation in one embodiment;
Fig. 3 is a sectional view showing the second fan assembly in operation in one embodiment;
Fig. 4 is a schematic view showing a fan structure in another embodiment;
Fig. 5 is a sectional view showing the first fan assembly in operation in another embodiment;
Fig. 6 is a sectional view showing the second fan assembly in operation in another embodiment;
Fig. 7 is a schematic structural view of a third housing and a fourth housing in another embodiment;
Fig. 8 is a sectional view showing a first fan assembly in operation with an air guide housing mounted;
Fig. 9 is a sectional view showing a second fan assembly in operation with an air guide housing mounted;
Fig. 10 is a schematic view showing the second fan assembly as an axial fan in another embodiment;
Fig. 11 is a sectional view showing the first fan assembly in operation with the second fan assembly as an axial fan;
Fig. 12 is a sectional view showing the second fan assembly in operation with the second fan assembly as an axial fan;
Fig. 13 is a sectional view showing the first fan assembly in operation with the first fan assembly as an air guide layer;
Fig. 14 is a sectional view showing the second fan assembly in operation with the first fan assembly as an air guide layer;
Fig. 15 is a schematic view showing the first fan assembly as a centrifugal fan and the second fan assembly as an axial fan;
Fig. 16 is a schematic view showing the first fan assembly in operation in Fig. 15;
Fig. 17 is a schematic view showing the second fan assembly in operation in Fig. 15;
Fig. 18 is an exploded view of a stacked fan structure;
Fig. 19 is an exploded view of the housings of the first fan assembly and the second fan assembly;
FIG. 20 is a schematic structural diagram showing a connecting portion mounted;
Fig. 21 is a sectional view showing the first fan assembly in operation with a connecting portion mounted;
Fig. 22 is a sectional view showing the second fan assembly in operation with a connecting portion mounted;

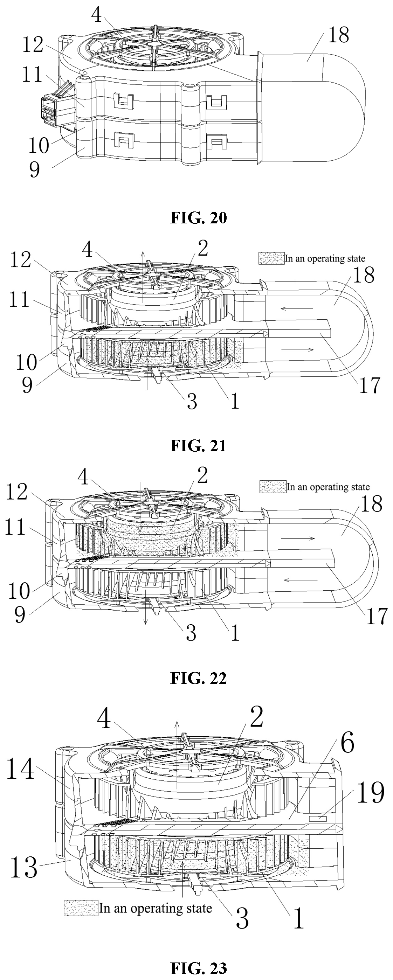

Fig. 22 is a sectional view with a connecting portion mounted and the second fan assembly in operation;
Fig. 23 is a sectional view showing the first fan assembly in operation with a sixth housing mounted in another embodiment;

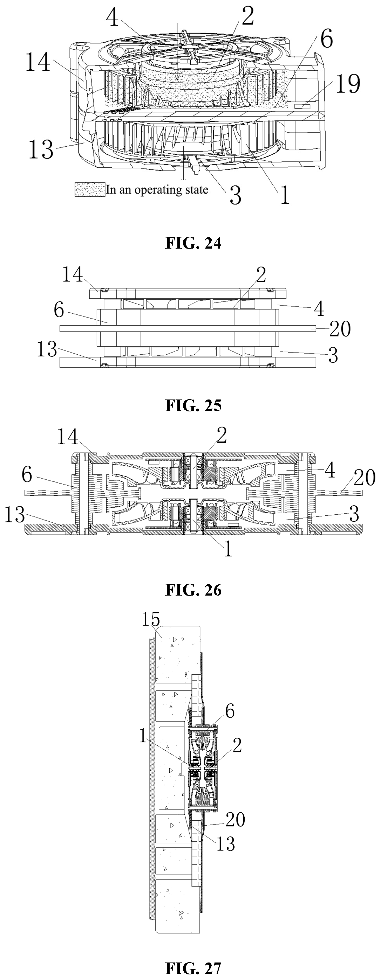

Fig. 24 is a sectional view showing the second fan assembly in operation with a sixth housing mounted in another embodiment;
Fig. 25 is a front view of the fan when the diameter of a first protruding portion is equal to that of the fifth housing;
Fig. 26 is a sectional view of the fan when the diameter of a first protruding portion is equal to that of the fifth housing;
Fig. 27 is a schematic view showing the fan mounted on an air guide layer when the diameter of a first protruding portion is equal to that of the fifth housing;

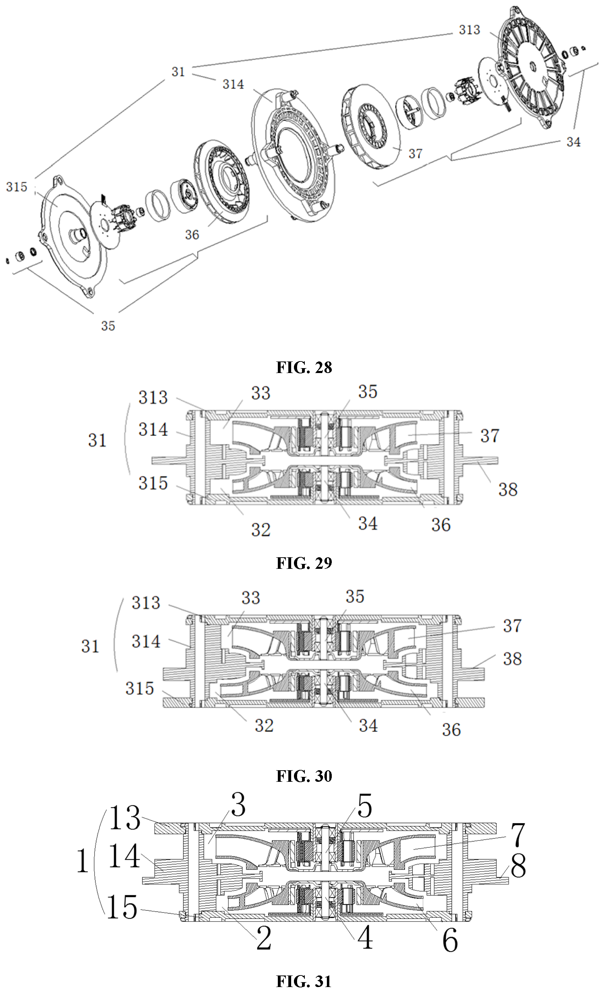

Fig. 28 is an exploded view of a combined blade-integrated fan with bidirectional asymmetric impellers;
Fig. 29 is a sectional view of a fan in one embodiment;
Fig. 30 is a sectional view of a fan in another embodiment;
Fig. 31 is a sectional view of a fan in yet another embodiment;

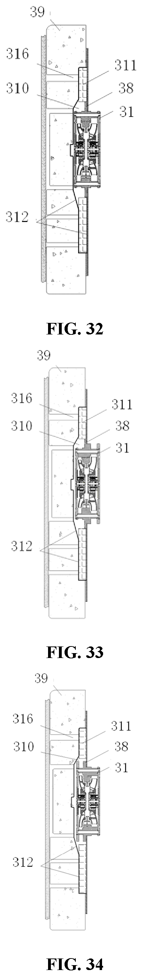

Fig. 32 is a schematic view showing a second protruding portion mounted on a support layer in one embodiment;
Fig. 33 is a schematic view showing a second protruding portion mounted on a support layer in yet another embodiment;
Fig. 34 is a schematic view showing a second protruding portion mounted on a support layer in another embodiment;

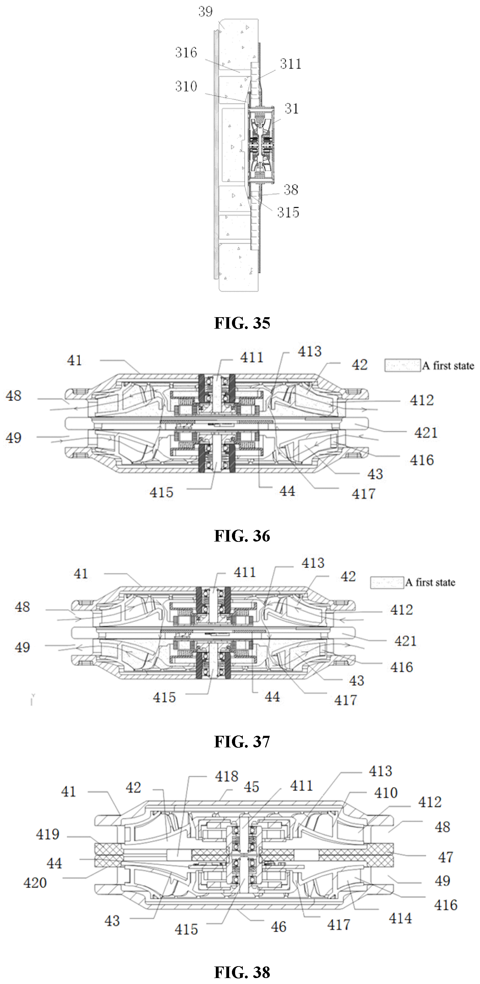

Fig. 35 is a schematic view of a fan mounted on a support layer when the diameter of the second protruding portion is equal to that of the lower housing;
Fig. 36 is a schematic view showing the first fan assembly in a first state;
Fig. 37 is a schematic view showing the second fan assembly in a first state;
Fig. 38 is a schematic view showing a split structure of a connecting housing;

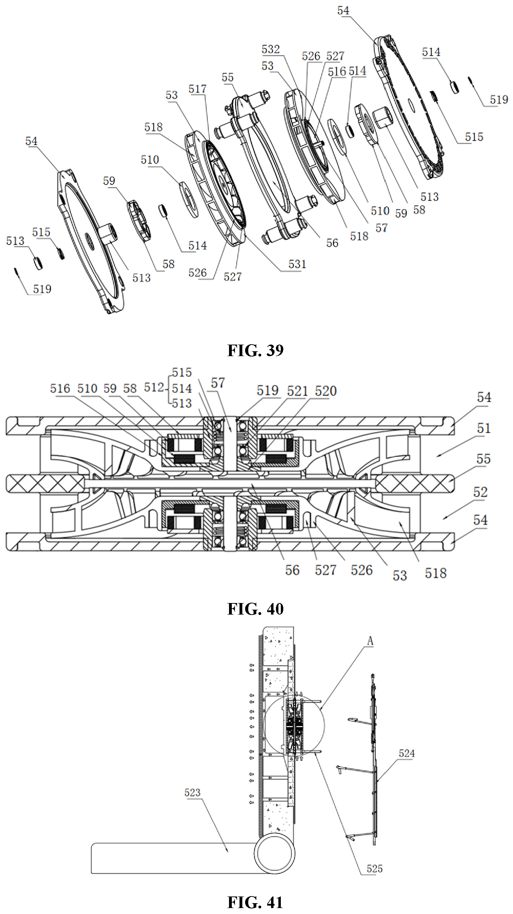

Fig. 39 is an exploded view of an ultra-thin double-sided independent separately-driven fan;
Fig. 40 is a sectional view of an ultra-thin double-sided independent separately-driven fan; and
Fig. 41 is a schematic view showing the mounting structure of the fan and the seat.

1 - First fan assembly; 2 - Second fan assembly; 3 - First air opening; 4 - Second air opening; 5 - Communication tube; 6 - Sixth housing; 7 - Connecting member; 8 - Rotating shaft; 9 - First housing; 10 - Second housing; 11 - Third housing; 12 - Fourth housing; 13 - Fifth housing; 14 - Seventh housing; 15 - Air guide layer; 16 - Fan blade; 17 - Partition plate; 18 - Connecting portion; 19 - Second through hole; 20 - First protruding portion;
31 - Housing assembly; 32 - Second air exchange opening; 33 - First air exchange opening; 34 - Second blade fan assembly; 35 - First blade fan assembly; 36 - Second impeller; 37 - First impeller; 38 - Second protruding portion; 39 - Support layer; 310 - Mounting groove; 311 - Air guide layer; 312 - Air bag film; 313 - Upper housing; 314 - Middle housing; 315 - Lower housing; 316 - Ventilation air duct;
41 - Mounting housing; 42 - First fan assembly; 43 - Second fan assembly; 44 - Control circuit board; 45 - First cover body; 46 - Second cover body; 47 - Connecting housing; 48 - First opening; 49 - Second opening; 410 - First impeller; 411 - First output shaft; 412 - First air inlet/outlet; 413 - Second air inlet/outlet; 414 - Second impeller; 415 - Second output shaft; 416 - Third air inlet/outlet; 417 - Fourth air inlet/outlet; 418 - Through hole; 419 - First connecting plate; 420 - Second connecting plate; 421 - Third connecting plate; 422 - First motor; 423 - Second motor;
51 - First air guide portion; 52 - Second air guide portion; 53 - Impeller; 531 - First working surface; 532 - Second working surface; 54 - First housing; 55 - Central housing; 56 - Ventilation portion; 57 - Transmission shaft; 58 - Circuit board; 59 - Hollow coil; 510 - Rotating magnet; 512 - Rotating assembly; 513 - Copper middle tube; 514 - Bearing; 515 - Preloading elastic member; 516 - Rotor frame; 517 - First air opening; 518 - Second air opening; 519 - C-shaped snap ring; 20 - Copper cap; 521 - protrusion; 523 - Seat; 524 - Seat spring frame; 525 - rivet; 526 - Reinforcing rib; 527 - Groove.

### DETAILED DESCRIPTION OF EMBODIMENTS

The present application is described below in optional detail with reference to the drawings and embodiments. It should be understood that the specific embodiments described herein are intended merely to explain the relevant application, rather than to limit the application. In addition, for ease of description, only the parts relevant to application are shown in the drawings.

It should be noted that the embodiments in the present application and the features in the embodiments may be combined with each other provided that no conflict arises. The present application will be described in detail below with reference to the drawings and embodiments.

The present application provides a stacked fan structure, a combined blade-integrated fan, a double-sided independent separately-driven fan, and an ultra-thin double-sided independent separately-driven fan, all of which are configured for use in a ventilation system of an automotive seat.

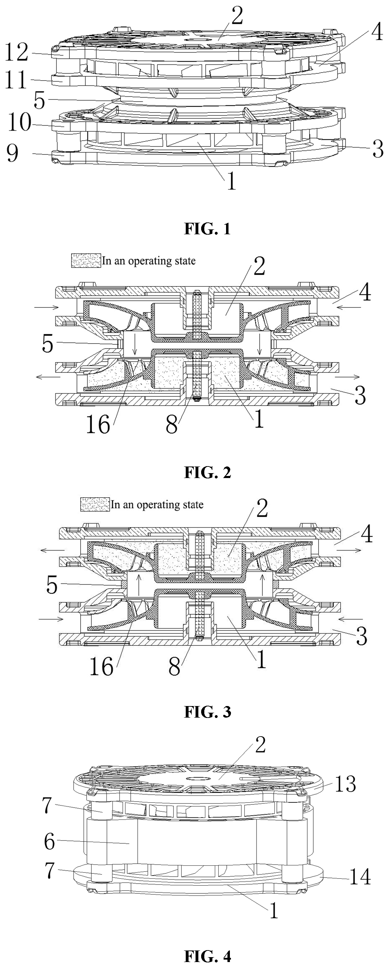

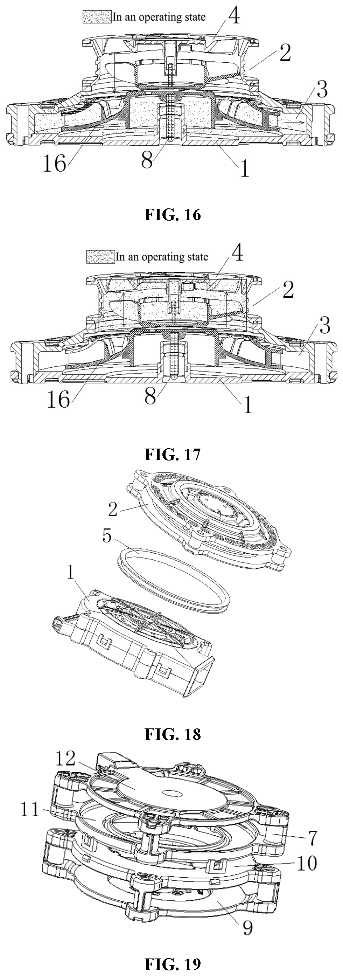

Please refer to Fig. 1 and Fig. 18, a stacked fan structure provided by the present application integrates two fan assemblies, namely a first fan assembly 1 and a second fan assembly 2. By controlling the two fan assemblies to operate respectively, the effect of switching between an air suction mode and an air blowing mode at a single air opening is achieved.

Herein, the shaded portions in all drawings of the present application indicate the parts in an operating state.

Please refer to Fig. 1 and Fig. 18, a stacked fan structure provided by the present application includes:
a first fan assembly 1, wherein the first fan assembly 1 is provided with a first air opening 3 and has a first space in its interior, and the first space is in communication with the first air opening 3;
a second fan assembly 2, wherein the second fan assembly 2 is provided with a second air opening 4 and has a second space in its interior, and the second space is in communication with the second air opening 4;
wherein the first fan assembly 1 and the second fan assembly 2 are connected to each other, and the first space is in communication with the second space.

In some embodiments, the fan assembly includes: an outer housing, a rotating shaft 8 fixedly mounted in an internal space of the housing (acting as a stator), fan blades 16 mounted in the internal space of the housing (acting as a rotor), and a circuit board electrically connected to the stator via PIN pins.

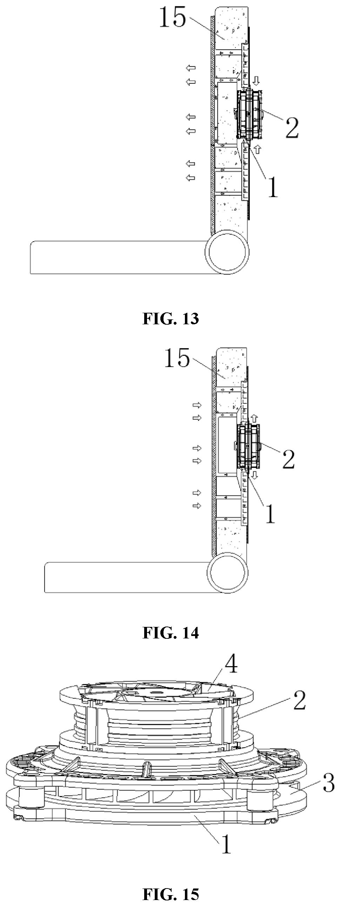

In some embodiments, with reference to Figs. 13 and 14, the first fan assembly 1 is mounted on an air guide layer 15 of a seat, and the first air opening 3 is in communication with the air guide layer 15 of the seat.

With reference to Fig. 2, when the first fan assembly 1 operates actively and the second fan assembly 2 is not active (not operating), the second air opening 4 serves as an air suction opening and the first air opening 3 serves as an air blowing opening; the air flows sequentially through the second air opening 4, the second space, the first space and the first air opening 3; and the fan of the second fan assembly 2 rotates passively, so as to achieve the function of blowing air to the air guide layer 15 of the seat, thereby realizing air blowing on the seat surface.

With reference to Fig. 3, when the second fan assembly 2 operates actively and the first fan assembly 1 is not active (not operating), the first air opening 3 serves as an air suction opening and the second air opening 4 serves as an air blowing opening; the air flows sequentially through the first air opening 3, the first space, the second space and the second air opening 4; and the fan of the first fan assembly 1 rotates passively, so as to achieve the function of sucking air from the air guide layer 15 of the seat, thereby realizing air suction on the seat surface.

It can be understood that during use, only one fan assembly is controlled to operate at a time, thereby achieving the effect of controlling over first air opening 3 to perform air suction or air blowing respectively, and switching the air suction mode and the air blowing mode of the fan structure. The internal structure of the above solution is simple in design and less prone to air leakage. Meanwhile, no additional motor is required, which reduces the space occupied by motor mounting and also lowers the overall weight of the structure.

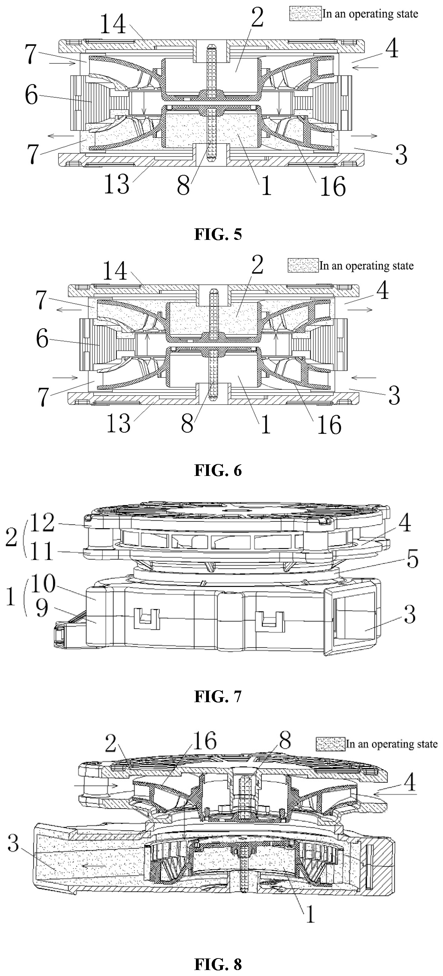

In some embodiments, with reference to Fig. 7, the first housing 9 and the second housing 10 of the first fan assembly 1 form an air guide housing. The air guide housing is mounted inside the air guide layer 15 of the seat, and an air guide opening is provided on the air guide housing. The air guide opening is in communication with the air guide layer 15 of the seat. Gas flows between the air guide layer 15 and the first space of the first fan assembly via the air guide opening of the air guide housing. Since the cross-section for gas flow is reduced, the gas flow rate can be increased.

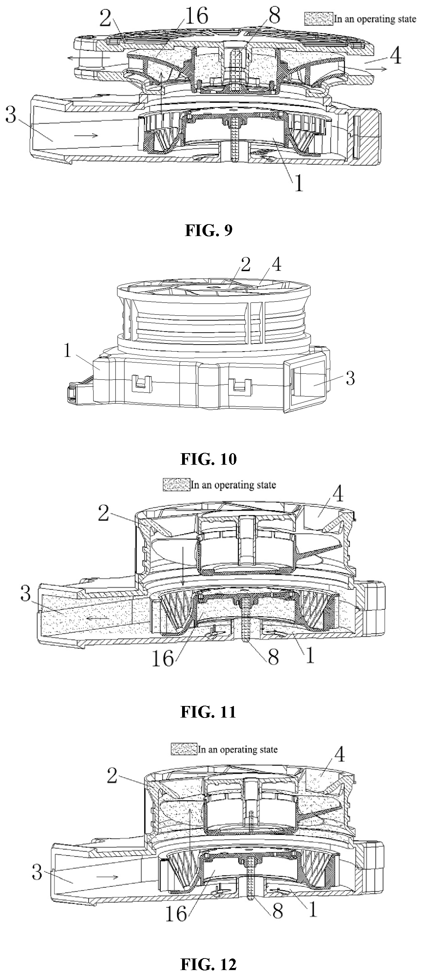

The gas flow modes of the air guide housing under different working modes can be referred to Figs. 8 to 9, with the arrow directions indicating the gas (air) flow direction. The first fan assembly 1 is in operation in Fig. 8, and the second fan assembly 2 is in operation in Fig. 9.

When the first fan assembly 1 is mounted on the air guide layer 15, schematic diagrams of the two operating states of the two fan assemblies can be referred to Figs. 13 to 14. The first fan assembly 1 is in operation in Fig. 13, and the second fan assembly 2 is in operation in Fig. 14, with the arrows indicating the gas flow direction. With reference to Fig. 13, when the first fan assembly 1 operates, the function of blowing air to the air guide layer 15 is achieved, and when the second fan assembly operates, the function of sucking air from the air guide layer is achieved.

In this embodiment, the housings of the first fan assembly 1 and the second fan assembly 2 may be either a detachable structure or an integrated structure.

In some embodiments, with reference to Fig. 19, the housings of the first fan assembly 1 and the second fan assembly 2 are detachable structures, specifically:
the first fan assembly 1 includes a first housing 9 and a second housing 10, and a first space is defined between the first housing 9 and the second housing 10;
the second fan assembly 2 includes a third housing 11 and a fourth housing 12, and a second space is defined between the third housing 11 and the fourth housing 12; and
the second housing 10 and the third housing 11 are connected via a connection structure, and the first space and the second space are in communication via the connecting structure.

Please refer to Figs. 2 to 3, with the arrows indicating the gas flow direction. The first fan assembly 1 is in operation in Fig. 2, and the second fan assembly 2 is in operation in Fig. 3.

In some embodiments, the connecting structure includes a communication tube 5, and the communication tube 5 communicates the first space with the second space. A first communication hole is formed on a side of the second housing 10 near the third housing 11, and a first communication hole is also formed on a side of the third housing 11 near the second housing 10. The communication tube 5 included in the connecting structure connects the two first communication holes, and is configured to communicate the first space with the second space.

Optionally, the communication tube 5 is a flexible hose, which communicates the first space with the second space, so that gas can directly flow between the two fans.

In some embodiments, referring to Fig. 4, the housings of the first fan assembly 1 and the second fan assembly 2 are of an integral structure, specifically:
the first fan assembly 1 includes a fifth housing 13, and the second fan assembly 2 includes a seventh housing 14;
a sixth housing 6 is mounted between the fifth housing 13 and the seventh housing 14, the first space is defined between the sixth housing 6 and the fifth housing 13, the second space is defined between the sixth housing 6 and the seventh housing 14, a second communication hole is formed on the sixth housing 6 and configured to communicate the first space with the second space. After the fifth housing 13, the sixth housing 6 and the seventh housing 14 are connected to each other, the housings of the first fan assembly 1 and the second fan assembly 2 form an integrated structure, and the first space is directly in communication with the second space.

In some embodiments, referring to Figs. 25 to 27, a first protruding portion 20 is provided on the sixth housing 6. The diameter of the fifth housing 13 is larger than that of the seventh housing 14, and the diameter of the first protruding portion 20 is greater than or equal to that of the fifth housing 13. A connecting space is formed between the first protruding portion 20 and the fifth housing 13, which is configured to connect with the air guide layer 15.

Optionally, the air guide layer 15 includes an air bag. In this case, both the first protruding portion 20 and the fifth housing 13 have relatively long sections, which can be connected to the pressure-bearing air guide structure inside the air bag. This makes the connection between the fan and the air guide layer 15 more stable, so as to reduce the occurrence of detachment caused by external force or long-term use.

In some embodiments, connecting members 7 are mounted between the sixth housing 6 and each of the first fan assembly 1 and the second fan assembly 2, and are configured to fixedly connect the first fan assembly 1, the second fan assembly 2 and the sixth housing 6.

Here, the gas flow direction refers to the arrows in Figs. 5 to 6. The operating modes of the two fan assemblies are the same as those in the previous embodiment. The first fan assembly 1 is in operation in Fig. 5, and the second fan assembly 2 is in operation in Fig. 6.

Optionally, the housings of the two fan assemblies are connected via the sixth housing 6. Such a connection manner enables a larger communication cross-section between the first space and the second space, which facilitates increasing the gas flow rate and improving the ventilation effect.

It can be understood that when the housings of the two fan assemblies are connected, they may also collide with each other due to vibration and generate noise. Therefore, in this embodiment, the connecting member 7 are used to respectively connect the housings of the first fan assembly 1 and the second fan assembly 2, so as to buffer vibration and reduce noise.

In some embodiments, referring to Figs. 23 to 24, the portion of the sixth housing 6 facing the first fan assembly and the second fan assembly is not in communication with the first space and the second space. The second through hole 19 is located at a position near the edge of the sixth housing 6, wherein the first space and the second space are communicated via the second through hole 19.

It can be understood that the side walls of both the fifth housing 13 and the seventh housing 14 are not in communication with the outside. Accordingly, gas can flow from the first space into the second space, or from the second space into the first space, only via the second through hole 19.

In some embodiments, the connecting structure includes a sealing ring and further includes a fixing structure. The first fan assembly 1 and the second fan assembly 2 are fixed to each other through the fixing structure, and the gap between the first fan assembly 1 and the second fan assembly 2 is sealed by the sealing ring.

Optionally, the fixing structure may be a snap-fit structure arranged on the first fan assembly 1 and the second fan assembly 2, or may be a rigid or flexible fixing pin. The first fan assembly 1 and the second fan assembly 2 are snapped to each other or fixed to each other by connection rivets, and a sealing ring is arranged between the mutually abutting housings of the two fan assemblies, which can effectively prevent air leakage from occurring at the connection portion of the housings of the two fan assemblies.

In some embodiments, the first fan assembly 1 includes a first impeller, and the second fan assembly 2 includes a second impeller. Both the first impeller and the second impeller include fan blades 16. At least one of the dimensions of the first impeller and the second impeller, or the lengths, thicknesses and inclination angles of the fan blades 16 on the first impeller and the second impeller is different.

It can be understood that, since the ventilation effects required for air suction and air blowing are different, simply changing the rotational speed of the fans may hardly achieve full adaptation. Therefore, in this embodiment, with the fan blades 16 of the first fan assembly 1 and the second fan assembly 2, improvements are made to the size of the fan blades 16 of the first fan assembly 1 and the second fan assembly 2 respectively, so that the fan blades 16 of the first fan assembly 1 and the second fan assembly 2 have different sizes. In this way, the rotational speed of the fans can be controlled cooperatively therewith, thereby achieving various different ventilation effects.

Optionally, the first fan assembly 1 and the second fan assembly 2 are arranged to face each other, face away from each other, or be arranged in the same direction.

It is to be understood that since a fan assembly requires a corresponding circuit for controlling the rotation of the fan blades 16, and circuits are generally provided on a circuit board, fan assemblies generally also include a circuit board. In the present embodiment, since two sets of fan assemblies are provided, two circuit boards should generally be provided, and a circuit board itself has a certain thickness.

It is worth mentioning that when the two fan assemblies are arranged to face away from each other or in the same direction, the two circuit boards are stacked on top of each other, which thus results in an increase in the overall structural thickness.

Therefore, when the first fan assembly 1 and the second fan assembly 2 are arranged facing each other in the present embodiment, they share a single circuit board. Accordingly, the control over the two fan assemblies can be achieved with only one circuit board, thus reducing the overall thickness of the structure.

Optionally, the stator of the first fan assembly 1 and the stator of the second fan assembly 2 are arranged in a staggered manner.

It is to be understood that, since the wires on the circuit board need to be connected to the stators of the fan assemblies, the difficulty of wiring arrangement on the circuit board is increased when the stators of the two fan assemblies are coaxial. In the present embodiment, the stators of the two fan assemblies are arranged in a staggered manner, allowing the wires on the circuit board to be offset from each other and reducing the difficulty of wiring arrangement.

In one embodiment, the first fan assembly 1 uses a centrifugal fan. The first air opening 3 is arranged at a lateral position of the first fan assembly 1, and is configured to allow the centrifugal fan in the first fan assembly 1 to blow air out through the first air opening 3 laterally.

In an optional embodiment, the selection of the fan in the second fan assembly 2 has the following two scenarios:
First scenario: the second air opening 4 is provided at a lateral position of the second fan assembly 2, and the second fan assembly 2 includes a centrifugal fan, wherein the centrifugal fan is configured to blow air out through the second air opening 4 laterally.

It can be understood that the second fan assembly 2 in this case is suitable for scenarios where the space in the direction perpendicular to the air guide layer 15 is narrow or where passengers are present. Lateral air blowing can prevent the air opening from being blocked by surrounding objects.

Second scenario: referring to Fig. 10, the second air opening 4 is arranged at an axial position of the second fan assembly 2, and the second fan assembly 2 includes an axial fan, wherein the axial fan is configured to blow air out through the second air opening 4 axially.

It can be understood that the second fan assembly 2 in this case is suitable for scenarios where the space along the extension direction of the air guide layer 15 is narrow or where there are objects that causes blockage. Axial air suction can prevent lateral objects from being sucked into the fan assembly under negative pressure, thereby avoiding malfunctions.

In this case, the gas flow directions under different operating modes of the fans refer to the arrows in Figs. 11 to 12. The first fan assembly 1 is in operation in Fig. 11, and the second fan assembly 2 is in operation in Fig. 12.

Referring to Figs. 15 to 17, the first fan assembly is equipped with a centrifugal fan and the second fan assembly is equipped with an axial fan. The arrows indicate the direction of gas movement.

In some embodiments, referring to Fig. 20, the first housing 9 and the second housing 10 of the first fan assembly, as well as the third housing 11 and the fourth housing 12 of the second fan assembly, are simultaneously connected with a connecting portion 18. The connecting portion 18 is a rigid housing or an elastic connecting member. The elastic connecting member can be a rubber tube, a rubber interface or a corrugated tube. The connecting portion 18 communicates the first space with the second space.

Referring to Figs. 20 to 22, both the first fan assembly 1 and the second fan assembly 2 are equipped with centrifugal fans. The connecting portion 18 is a rigid housing with a hollow interior structure, and its internal space is divided by a partition plate 17 into two parts that are in communication with each other. The partition plate 17 is fixedly connected to both the second housing 10 and the third housing 11, so that the spaces of two parts inside the connecting portion 18 are in communication with the first space and the second space, respectively.

It can be understood that when both the first fan assembly 1 and the second fan assembly 2 are equipped with centrifugal fans, the remaining parts of the first housing 9, the second housing 10, the third housing 11 and the fourth housing 12 isolate the internal spaces of the first fan assembly and the second fan assembly from the outside. The first space and the second space are only in communication with each other via the connecting portion 18, so that the blown gas can enter the other space exclusively via the connecting portion 18.

Referring to Fig. 21, when the first fan assembly 1 is in operation, gas flows from the first space into the second space via the connecting portion 18 to achieve an air suction function. Referring to Fig. 22, when the second fan assembly 2 is in operation, gas flows from the second space into the first space via the connecting portion 18 to achieve an air blowing function. In Figs. 21 to 22, the arrows all indicate the direction of gas movement.

The present application further provides an automotive seat ventilation system, including the stacked fan structure described above.

Referring to Figs. 28 to 35, the present application provides a combined blade-integrated fan integrating two fan assemblies, namely a first blade fan assembly 35 and a second blade fan assembly 34. The two fan assemblies are controlled to operate separately to achieve the effect of switching one air opening between the air suction mode and the air blowing mode.

Meanwhile, it is also provided with a bidirectional asymmetric impeller, which has only one path for gas flow, making it less prone to air leakage. As a result, it ensures sufficient gas flow and delivers a favorable ventilation effect.

Referring to Figs. 28 to 35, the present application provides a combined blade-integrated fan with bidirectional asymmetric impellers, including:
a housing assembly 31, wherein the housing assembly 31 defines a first space and a second space that are in communication with each other in its interior, the housing assembly 31 is provided with a first air exchange opening 33 and a second air exchange opening 32, the first space is in communication with the first air exchange opening 33, and the second space is in communication with the second air exchange opening 32;
the first air exchange opening 33 is larger than the second air exchange opening 32, so as to facilitate an increase in gas flow;
a first blade fan assembly 35 and a second blade fan assembly 34, wherein the first blade fan assembly 35 is mounted in the first space, the second blade fan assembly 34 is mounted in the second space, and the first blade fan assembly 35 and the second blade fan assembly 34 operate independently from each other;
wherein, when the first blade fan assembly 35 operates actively, gas flows from the side of the automotive seat near an occupant, through the second air exchange opening 32, the second space, the first space and the first air exchange opening 33, to the side of the automotive seat away from the occupant, thereby achieving an air suction effect;
when the second blade fan assembly 34 operates actively, gas flows from the side of the automotive seat away from an occupant, through the first air exchange opening 33, the first space, the second space and the second air exchange opening 32, to the side of the automotive seat near the occupant, thereby achieving an air blowing effect;
wherein the first blade fan assembly 35 includes a first impeller 37, and the second blade fan assembly 34 includes a second impeller 36;
the first impeller 37 and the second impeller 36 have different thicknesses along a direction in which rotating shafts of the first impeller 37 and the second impeller 36 extend.

Herein, the first air exchange opening 33 is in communication with the rear inner cavity of the automotive seat, and the second air exchange opening 32 is in communication with a ventilation component inside the automotive seat, wherein the ventilation component is configured to communicate the side of the automotive seat near an occupant with the side away from the occupant.

In the present embodiment, the thickness of the first impeller 37 along a direction in which the rotating shaft of the first impeller extends is greater than that of the second impeller 36 along a direction in which rotating shaft the second impeller extends.

In the present embodiment, the blade fan assembly includes: an outer housing assembly 31, a stator fixedly mounted in the inner space of the housing assembly 31, an impeller (serving as a rotor) mounted in the inner space of the housing assembly 31, and a circuit board electrically connected to the stator via PIN pins.

It can be understood that when the first impeller 37 and the second impeller 36 have the same width, the first impeller 37 generates a larger air volume during rotation due to its greater thickness, resulting in a more comfortable experience for the occupant.

In the present embodiment, during operation, controlling the two fan assemblies to operate respectively can accomplish both air suction and air blowing functions, resulting in a simple structure facilitating convenient control.

In the present embodiment, the design of the impellers of the two fan assemblies includes:
the length of the first impeller 37 in a direction perpendicular to its rotating shaft is smaller than that of the second impeller 36 in the direction perpendicular to its rotating shaft.

Referring to Fig. 30, this is a case where the first impeller 37 is thicker while the second impeller 36 is wider. The purpose of this structure is to increase the perimeter of the second air exchange opening 32. With the second impeller 36 having the same thickness, a longer length leads to a larger opening for air exchange with the outside and higher ventilation efficiency.

It can be understood that the thicker first impeller 37 of the first blade fan assembly 35 can drive more gas to move during rotation, thereby increasing gas circulation to improve the ventilation effect.

Notably, existing suction fans are all arranged on the side away from the occupant. Gas needs to pass through air holes in the support layer of the automotive seat and the air guide layer 311 in sequence before entering the fan and being finally discharged to the outside. The overall air path is relatively long, resulting in a small flow rate during air suction and thus poor air suction effect.

In the present embodiment, the first air exchange opening 33 is larger than the second air exchange opening 32, and is configured to increase the gas flow rate during air suction, thereby achieving higher air suction efficiency.

Optionally, both the second impeller 36 and the first impeller 37 adopt blade centrifugal structures, and the directions of gas (air) movement driven by the rotation of the second impeller 36 and the first impeller 37 are opposite. Both the second air exchange opening 32 and the first air exchange opening 33 are located on the side wall of the housing assembly 31.

Based on the structural design described above, the blade centrifugal impellers drive gas from the side of the rotating shaft to the outer side of the impellers during rotation, so as to realize the function of driving air flow. Furthermore, the first impeller 37 is arranged near the first air exchange opening 33, and the second impeller 36 is arranged near the second air exchange opening 32. During air movement, the air moves to the outside of the housing assembly 31 through the first air exchange opening 33 and the second air exchange opening 32 respectively.

The first air exchange opening 33 is located at the side inside the automotive seat away from the occupant, while the second air exchange opening 32 is located at the side inside the automotive seat near the occupant. A rear cover is further disposed at the rear of the automotive seat on the side away from the occupant, and a cavity is formed between the automotive seat and the rear cover for gas flow. The above structural design enables the air suction and air blowing functions to be realized when the two fan assemblies are controlled to operate separately.

Optionally, the housing assembly 31 includes:
an upper housing 313, a middle housing 314 and a lower housing 315 that are connected to one another, wherein the first space is defined between the upper housing 313 and the middle housing 314, and the second space is defined between the middle housing 314 and the lower housing 315. The upper housing 313, middle housing 314 and lower housing 315 are connected to each other in a snap-fit manner, forming a first air exchange opening 33 between the edges of the upper housing 313 and the middle housing 314, and a second air exchange opening 32 between the edges of the middle housing 314 and the lower housing 315.

Optionally, a second protruding portion 38 is provided on the outer wall of the middle housing 314. The second protruding portion 38 is configured to be connected with a support (bearing) layer 39, so as to fix the relative position between the housing assembly 31 and the support layer 39.

In the present embodiment, since the ventilation system is disposed on the automotive seat, the fan can be fixed to the automotive seat, thereby facilitating the implementation of the air suction or air blowing function.

In an embodiment, referring to Fig. 29, the housing assembly 31 is provided with an annular sheet-shaped second protruding portion 38.

In another embodiment, referring to Fig. 30, the second protruding portion 38, as shown in the figure, can increase the contact area and improve the connection stability.

Referring to Fig. 31, the first impeller 37 in the first blade fan assembly 35 is wider than the second impeller 36 in the second blade fan assembly 34. Accordingly, the first air exchange opening 33 is also larger than the second air exchange opening 32.

Referring to Fig. 31, the second protruding portion 38 is respectively arranged on the side of the middle housing 314 near the first air exchange opening 33 and the side near the second air exchange opening 32. When the second protruding portion 38 is located near the second air exchange opening 32, the second protruding portion 38 protrudes beyond the upper housing 313.

Based on the structural design described above, the second protruding portion 38 can be conveniently connected with air guide portions of various structures.

The additional protrusion on the second protruding portion 38 can be designed in various shapes. For details, reference may be made to Fig. 31. When being connected with other components, the shape of the second protruding portion 38 that facilitates connection can be freely selected according to the shape of the other components to complete mounting.

The position of the second protruding portion 38 on the middle housing 314 can be designed according to actual needs, as long as it is ensured to be located between the second air exchange opening 32 and the first air exchange opening 33.

Referring to Fig. 32, it shows a structural view of the second protruding portion 38 in another embodiment and a schematic view showing its mounting on the support layer 39.

Referring to Figs. 33 to 34, they show a structural view of the second protruding portion 38 in yet another embodiment and a schematic view showing its mounting on the support layer 39.

The three embodiments respectively display various structural designs of the second protruding portion 38, which is configured to be connected to the side of the support layer 39 of the automotive seat away from the occupant. The relative position between the fan and the seat can be fixed by multiple different connection manners.

In some embodiments, referring to Fig. 35, the diameter of the lower housing 315 is larger than that of the upper housing 313, and the diameter of the second protruding portion 38 is greater than or equal to the diameter of the lower housing 315. A connection space is formed between the second protruding portion 38 and the lower housing 315, and is configured to connect with the air guide layer 311 to fix the relative position between the housing assembly 31 and the air guide layer 311, thereby making the connection between the housing assembly 31 and the air guide layer 311 more stable and reducing the risk of falling off caused by external forces or long-term use.

Here, for the fixed connection with the air guide layer 311, it is only necessary to form the connecting space between the second protruding portion 38 and the lower housing 315. Therefore, the diameter of the second protruding portion 38 is set to be greater than or equal to that of the lower housing 315.

Both single air suction and single air blowing have respective advantages and disadvantages.

Advantages of air suction: gentle airflow sensation and high cooling rate; Disadvantages: weak airflow sensation.

Advantages of air blowing: strong airflow sensation; Disadvantages: hot air is blown out when the ventilation system of the seat backrest starts to operate.

The fan disclosed in the present application can be used to switch between the air blowing mode and the air suction mode manually, or the air blowing mode and the air suction mode can be automatically switched under system control.

Air suction can be performed first to achieve rapid cooling by virtue of its advantage of large air volume of air suction, and then air blowing can be carried out to improve the airflow sensation by taking advantage of the characteristics of air blowing.

The present application further provides an automotive seat, including the combined blade-integrated fan with bidirectional asymmetric impellers according to the above embodiments.

The automotive seat provided by the present application includes:
a combined blade-integrated fan;
a support layer 39 configured to communicate the space on the side near the occupant and the space on the side away from the occupant, wherein an air guide portion is arranged on the side of the support layer 39 away from the occupant, the housing assembly 31 is connected to the air guide portion, and the second air exchange opening 32 is in communication with an inner space of the air guide portion.

Optionally, the air guide portion includes an air guide layer 311 and an air bag film 312, with the air bag film 312 covering the air guide layer 311. A mounting groove 310 is formed in the air guide layer 311. The housing assembly 31 is disposed in the mounting groove 310, and the second air exchange opening 32 is in communication with the inner space of the air guide layer 311. A ventilation hole is provided on the side of the air bag film 312 near the support layer 39, and the ventilation hole is in corresponding communication with the ventilation air duct 316. A first mounting hole is provided on the side of the air bag film 312 away from the support layer 39, the first mounting hole corresponding to the mounting groove 310 and being configured to accommodate the housing assembly 31.

Optionally, the air guide portion includes an air guide groove, the air guide groove being in communication with the ventilation air duct 316. A sealing layer is provided on the side of the air guide groove away from the support layer 39, and a second mounting hole is provided in the sealing layer. The housing assembly 31 passes through the second mounting hole and is disposed in the air guide groove, and the second air exchange opening 32 is in communication with an internal space formed by the air guide groove and the sealing layer.

Referring to FIG. 36 to FIG. 38, the present application further provides a double-sided independent separately-driven fan integrated with two fan assemblies, namely a first fan assembly 42 and a second fan assembly 43. The two fan assemblies are controlled to operate separately to achieve the effect of switching one air opening between the air suction mode and the air blowing mode. Meanwhile, separate control over the first fan assembly 42 and the second fan assembly 43 is realized via a control circuit board.

Referring to FIG. 36 to FIG. 37, the present application further provides a double-sided independent separately-driven fan, including:
a mounting housing 41, wherein the mounting housing 41 has a first mounting space and a second mounting space stacked in a first direction in its interior, the first fan assembly 42 is disposed in the first mounting space, the second fan assembly 43 is disposed in the second mounting space, and each of the first fan assembly 42 and the second fan assembly 43 has a first state and a second state; and
a control circuit board 44 disposed between the first fan assembly 42 and the second fan assembly 43, wherein the control circuit board 44 has a first side and a second side that are away from each other, the first side corresponds to the first fan assembly 42 and is electrically connected to the first fan assembly 42, and the second side corresponds to the second fan assembly 43 and is electrically connected to the second fan assembly 43, the control circuit board 44 is configured to control the first fan assembly 42 or the second fan assembly 43 respectively, such that when the first fan assembly 42 is in the first state, the second fan assembly 43 is in the second state, or when the first fan assembly 42 is in the first state, the second fan assembly 43 is in the second state.

Here, the first direction is the vertical direction as shown in the figures.

In the present embodiment, the mounting housing 41 includes a first cover body 45, a second cover body 46 and a connecting housing 47, wherein the connecting housing 47 is disposed between the first cover body 45 and the second cover body 46, dividing the internal space of the mounting housing 41 into a first mounting space and a second mounting space. The first mounting space is formed between the first cover body 45 and the connecting housing 47, and the second mounting space is formed between the second cover body 46 and the mounting housing 41.

Optionally, referring to Fig. 38, the connecting housing 47 may be a split structure, which includes a first connecting plate 419 and a second connecting plate 420 arranged in sequence. The first connecting plate 419 is adjacent to the first cover body 45, and the second connecting plate 420 is adjacent to the second cover body 46. The first mounting space is formed between the first connecting plate 419 and the first cover body 45, and the second mounting space is formed between the second connecting plate 420 and the second cover body 46.

In the present embodiment, the first fan assembly 42 is disposed in the first mounting space, and the second fan assembly 43 is disposed in the second mounting space. Each of the first fan assembly 42 and the second fan assembly 43 has the first state and the second state.

In the present embodiment, the first fan assembly 42 includes a first motor 422 and a first impeller 410. The first motor 422 has a first output shaft 411, and the first impeller 410 is coaxially and fixedly connected to a first output shaft 411, wherein the first output shaft 411 is rotated under the drive of the first motor 422, thereby driving the first impeller 410 to rotate.

Optionally, a first opening 48 is circumferentially disposed in the first mounting space and communicates therewith. A first ventilation space is formed inside the first impeller 410. A plurality of first air inlets/outlets 412 in communication with the first ventilation space are uniformly formed in the circumferential direction of the first impeller 410. A second air inlet/outlet 413 in communication with the first ventilation space is formed on the side of the first impeller 410 near the first output shaft 411, and the second air inlet/outlet 413 is in communication with the first mounting space.

In the present embodiment, the second fan assembly 43 includes a second motor 423 and a second impeller 414. The second motor 423 has a second output shaft 415, and the second impeller 414 is coaxially and fixedly connected to the second output shaft 415, wherein the second output shaft 415 is rotated under the drive of the second motor 423, thereby driving the second impeller 414 to rotate.

Optionally, a second opening 49 is circumferentially disposed in the second mounting space and communicates therewith. A second ventilation space is formed inside the second impeller 414. A plurality of third air inlets/outlets 416 in communication with the second ventilation space are uniformly formed in the circumferential direction of the second impeller 414. A fourth air inlet/outlet 417 in communication with the second ventilation space is formed on the side of the second impeller 414 near the second output shaft 415, and the fourth air inlet/outlet 417 is in communication with the second mounting space.

It should be noted that, referring to FIG. 36 to FIG. 37, at this time, the first air inlet/outlet 412 and the third air inlet/outlet 416 are disposed close to each other in the first direction, that is, the first impeller 410 and the second impeller 414 are in a standard (forward) mounting form.

When the first fan assembly 42 is in the first state, the first motor 422 drives the first impeller 410 to rotate, and at this time the second fan assembly 43 is in the second state, with the second motor 423 not operating.

When the second fan assembly 43 is in the first state, the second motor 423 drives the second impeller 414 to rotate, and at this time the first fan assembly 42 is in the second state, with the first motor 422 not operating. A through hole 418 is formed extending through the connecting housing 47, configured to allow air flow to pass through.

Accordingly, when the first fan assembly 42 is in the first state, the first motor 422 drives the first impeller 410 to rotate, and the second motor 423 does not operate, such that external air flow enters the second ventilation space through the third air inlet/outlet 416, then enters the second mounting space through the fourth air inlet/outlet 417, enters the first mounting space through the through hole 418, then enters the first ventilation space through the second air inlet/outlet 413, and is finally discharged to the outside through the first air inlet/outlet 412.

When the second fan assembly 43 is in the first state, the second motor 423 drives the second impeller 414 to rotate, and the first motor 422 does not operate, such that external air flow enters the first ventilation space through the first air inlet/outlet 412, then enters the first mounting space through the second air inlet/outlet 413, enters the second mounting space through the through hole 418, then enters the second ventilation space through the fourth air inlet/outlet 417, and is finally discharged to the outside through the third air inlet/outlet 416.

It should be noted that when the first fan assembly 42 and the second fan assembly 43 are both in the first state, the second impeller 414 and the first impeller 410 may rotate under the influence of the air flow.

Optionally, the first motor 422 and the second motor 423 may be coreless motors or conventional motors.

In the present embodiment, the control circuit board 44 is disposed between the first fan assembly 42 and the second fan assembly 43.

Optionally, the control circuit board 44 may be disposed in the first mounting space or the second mounting space.

Optionally, the control circuit board 44 has a first side and a second side that are away from each other. The first side corresponds to the first fan assembly 42 and is electrically connected to the first fan assembly 42, and the second side corresponds to the second fan assembly 43 and is electrically connected to the second fan assembly 43. The control circuit board 44 is configured to control the first fan assembly 42 or the second fan assembly 43 separately, such that when the first fan assembly 42 is in the first state, the second fan assembly 43 is in the second state, or when the first fan assembly 42 is in the first state, the second fan assembly 43 is in the second state.

Optionally, referring to FIG. 36 to FIG. 37, the connecting housing 47 may be an integrated structure, which includes a third connecting plate 421.

Optionally, when the connecting housing 47 is an integrated structure, the control circuit board 44 is disposed on the third connecting plate 421, and the first side and the second side are configured to control the first fan assembly 42 and the second fan assembly 43 respectively.

Optionally, referring to FIG. 36 to FIG. 37, the first air inlet/outlet 412 and the third air inlet/outlet 416 are disposed close to each other in the first direction. To realize air flow circulation, a second air inlet/outlet 413 is provided on the side of the first impeller 410 near the first output shaft 411, and a fourth air inlet/outlet 417 is provided on the side of the second impeller 414 near the second output shaft 415.

Accordingly, when the first fan assembly 42 is in the first state, external air flow is drawn in through the second opening 49, then sequentially passes through the third air inlet/outlet 416, the fourth air inlet/outlet 417, the through hole 418, the second air inlet/outlet 413 and the first air inlet/outlet 412, and is blown out through the first opening 48. The direction of the arrows in FIG. 36 represents the gas flow direction.

When the second fan assembly 43 is in the first state, external air flow is drawn in through the first opening 48, then sequentially passes through the first air inlet/outlet 412, the second air inlet/outlet 413, the through hole 418, the fourth air inlet/outlet 417 and the third air inlet/outlet 416, and is blown out through the second opening 49. The direction of the arrows in FIG. 37 represents the gas flow direction.

Optionally, referring to FIG. 38, the first air inlet/outlet 412 and the third air inlet/outlet 416 are disposed away from each other in the first direction. The first impeller 410 and the second impeller 414 are in a reverse mounting form compared with FIG. 36, and the second air inlet/outlet 413 and the fourth air inlet/outlet 417 do not need to be provided.

It can be understood that, when the first fan assembly 42 or the second fan assembly 43 is in the first state accordingly, air flow directly passes through the through hole 418 after passing through the first air inlet/outlet 412 or the second air inlet/outlet 413, so as to realize ventilation.

It should be noted that, referring to FIG. 38, the first impeller 410 and the second impeller 414 in the reverse mounting form can also be arranged on coreless motors. The first impeller 410 and the second impeller 414 in the reverse mounting form can make the air flow passage smoother, and improve the air blowing effect and air suction effect of the first fan assembly 42 and the second fan assembly 43.

It should be noted that the first impeller 410 and the second impeller 414 are different from each other. Specifically, the first impeller 410 and the second impeller 414 may differ in size or shape, that is, at least one of the length, thickness and inclination angle of the blades on the first impeller 410 and the second impeller 414 is different.

Working principle: the device is mounted in an automotive seat. The control circuit board 46 controls the first fan assembly 42 and the second fan assembly 43 separately. When the first fan assembly 42 is in the first state, the second fan assembly 43 is in the second state. When the first fan assembly 42 is in the first state, the second fan assembly 43 is in the second state. That is, when the first fan assembly 42 operates to blow air, air is drawn in at the second fan assembly 43. And when the second fan assembly 43 operates to blow air, air is drawn in at the first fan assembly 42. In this way, the selection between the air blowing mode and the air suction mode of the automotive seat is realized. In a desired environment, effective air circulation on the seat surface is achieved, so as to avoid discomfort to the human body caused by a single mode.

Referring to FIG. 39 to FIG. 40, the present application also provides an ultra-thin double-sided independent separately-driven fan, which integrates two air guide portions, namely the first air guide portion 51 and the second air guide portion 52. Meanwhile, the two air guide portions are controlled to operate separately, so as to switch between the air suction mode and the air blowing mode at a single air opening. In addition, the stacked arrangement of the two impellers effectively reduces the thickness and size of the fan, thereby improving the mounting adaptability of the fan.

Referring to FIG. 39 to FIG. 40, the present application provides an ultra-thin double-sided independent separately-driven fan configured for ventilation of a seat 523, including:
a mounting housing, in which a first mounting space and a second mounting space are coaxially stacked and in communication with each other, wherein a first air guide portion 51 in communication with the first mounting space and a second air guide portion 52 in communication with the second mounting space are respectively arranged on the peripheral side of the mounting housing;
a pair of impellers 53, which are rotatably mounted in the first mounting space and the second mounting space respectively, wherein the impeller 53 in the first mounting space and the first air guide portion 51 form a first air blowing and suction unit, and the impeller 53 in the second mounting space and the second air guide portion 52 form a second air blowing and suction unit; and
a circumferential magnetic flux drive mechanism, configured to independently drive the pair of impellers 53 to rotate respectively.

In the present embodiment, a first mounting space and a second mounting space are formed inside the mounting housing along the axial direction. The first mounting space and the second mounting space are stacked and in communication with each other. A respective impeller 53 is rotatably mounted in each of the first mounting space and the second mounting space. The two impellers 53 arranged in the first mounting space and the second mounting space are coaxially disposed, and both are driven to rotate by the axial magnetic flux drive mechanism. The first air guide portion 51 refers to a plurality of openings formed on the peripheral side of the mounting housing, wherein the plurality of openings are distributed around the first mounting space, and the openings are in communication with the first mounting space. The second air guide portion 51 refers to a plurality of openings formed on the peripheral side of the mounting housing, wherein the plurality of openings are distributed around the second mounting space, and the openings are in communication with the second mounting space.

In the present embodiment, the fan provided by the present application has different working modes, and the air suction effect or air blowing effect can be realized by separately driving the two impellers 53. When only the impeller 53 in the first mounting space is driven to rotate, the impeller 53 in the first mounting space is configured to draw air outside the mounting housing into the first mounting space through the first air guide portion 51, and then guide the air into the second mounting space, with the impeller 53 in the second mounting space either following the rotation or remaining stationary, and air in the second mounting space is blown out through the second air guide portion 52, so as to realize air suction at the first air guide portion 51 and air blowing at the second air guide portion 52. When only the impeller 53 in the second mounting space is driven to rotate, air outside the mounting housing is drawn into the first mounting space through the first air guide portion 51 under the driving of the impeller 53, with the impeller 53 in the first mounting space either following the rotation or remaining stationary. The air is then guided from the first mounting space to the second mounting space and blown out through the second air guide portion 52, which can also realize air suction at the first air guide portion 51 and air blowing at the second air guide portion 52.

Optionally, the impeller 53 includes a convex first working surface 531 and a concave second working surface 532, and the first working surfaces 531 of the pair of impellers 53 are disposed close to each other.

Optionally, the impeller 53 includes a convex surface and a concave surface, wherein the convex surface is the front surface and serves as the first working surface 531, and the concave surface is the back surface and serves as the second working surface 532. A ring of reinforcing ribs 526 is provided on both the first working surface 531 and the second working surface 532 of the impeller 53, and a plurality of grooves 527 are formed on the reinforcing ribs 526 along the circumferential direction. A first air opening 517 is provided on the second working surface 532 of the impeller 53, and a plurality of second air openings 518 are formed on the outer peripheral side of the impeller 53, the second air openings 518 being in communication with the first air opening 517. The first air opening 517 of the impeller 53 in the first mounting space is disposed in correspondence with the first air opening 517 of the impeller 53 in the second mounting space. The second air openings 518 of the impeller 53 in the first mounting space are disposed corresponding to the first air guide portion 51, and the second air openings 518 of the impeller 53 in the second mounting space are disposed corresponding to the second air guide portion 52.

In the present embodiment, the first working surfaces 531 of the pair of impellers 53 are disposed close to each other. When the impeller 53 in the first mounting space rotates, air is drawn in through the second air opening 518 of the impeller 53 in the second mounting space, and blown out through the first air opening 517 of the impeller 53 in the second mounting space; the air then enters the first air opening 517 of the impeller 53 in the first mounting space, and is further blown out through the second air opening 518 of the impeller 53 in the first mounting space. Accordingly, the impeller 53 in the first mounting space and the first air guide portion 51 form an air blowing unit, and the impeller 53 in the second mounting space and the second air guide portion 52 form an air suction unit. When the impeller 53 in the second mounting space rotates, air is drawn in through the second air opening 518 of the impeller 53 in the first mounting space, and blown out through the first air opening 517 of the impeller 53 in the first mounting space; the air then enters the first air opening 517 of the impeller 53 in the second mounting space, and is further blown out through the second air opening 518 of the impeller 53 in the second mounting space. Accordingly, the impeller 53 in the second mounting space and the second air guide portion 52 form an air blowing unit, and the impeller 53 in the first mounting space and the first air guide portion 51 form an air suction unit.

Air is drawn in through the first air opening 517 and blown out through the second air opening 518. In the present embodiment, the fan adopts a form where the pair of impellers 53 are arranged face-to-face.

The fan provided in the present embodiment can achieve air suction and air blowing at any position in the circumferential direction of the fan, thereby meeting the requirements for air suction and air blowing in the seat 523 ventilation system. Since the two impellers 53 in the fan provided in this embodiment are coaxially stacked, the air suction and air blowing effects of the fan are enhanced, thereby satisfying the cooling efficiency requirements of the seat 523 ventilation system. In addition, the arrangement in which the two impellers 53 are stacked inside the mounting housing effectively reduces the thickness of the mounting housing, enabling the fan to be more conveniently configured into the seat 523 ventilation system and meeting the miniaturization requirements of the fan.

Referring to FIG. 41, where A in FIG. 41 represents the fan provided in the present embodiment. The fan provided in the present embodiment realizes ventilation of the seat 523 by being mounted on the automotive seat 523. One half of the fan is placed in an air bag on the seat 523, and the other half is disposed outside the seat 523. The fan can be directly fixed to the seat 523, or fixed to a seat spring frame 524 via the rivets 525, and the seat spring frame 524 is fixed to the seat 523. In the present embodiment, the half of the fan embedded in the air bag serves as an air blowing fan, and when activated, the seat 523 ventilation system operates in the air blowing mode. The half of the fan located outside the air bag serves as an air suction fan, and when activated, the seat 523 ventilation system operates in the air suction mode.

Optionally, the mounting housing includes a central housing 55 and a pair of first housings 54. The pair of first housings 54 are respectively disposed on two sides of the central housing 55. The first mounting space is formed between one first housing 54 and the central housing 55, and a second mounting space is formed between the other first housing 54 and the central housing 55. A ventilation portion 56 configured to communicate the first mounting space with the second mounting space is provided on the central housing 55.

In the present embodiment, the central housing 55 is of an integrated structure. A plurality of snap-fit holes are provided on the peripheral side of the central housing 55, and snap-fit posts are provided on the peripheral side of the first housing 54 corresponding to the snap-fit holes. The first housing 54 can be mounted on two sides of the central housing 55 through the cooperation between the snap-fit posts and the snap-fit holes. The central housing 55 cooperates with the first housings 54 on two sides thereof to form the first mounting space and the second mounting space on two sides of the central housing 55, respectively. A ventilation portion 56 is provided at the center of the central housing 55, and the ventilation portion 56 penetrates two sides of the central housing 55 to communicate the first mounting space with the second mounting space. In the present embodiment, configuring the central housing 55 as an integrated structure can effectively reduce the overall thickness of the fan, thereby improving the adaptability of the fan during mounting.

In the present embodiment, since the convex surfaces of the two impellers 53 are disposed close to each other, the sides of the pair of first housings 54 near the impellers 53 are each configured as a flat surface to accommodate the mounting of the impellers 53.

Optionally, the axial magnetic flux drive mechanism includes:
a pair of transmission shafts 57, which are respectively mounted in the first mounting space and the second mounting space via a pair of rotating assemblies 512, wherein the transmission shafts 57 are coaxially arranged and fixedly connected to the impellers 53; and
a driving device, which is sleeved on the pair of transmission shafts 57 respectively and configured to independently drive the pair of transmission shafts 57.

Optionally, the axial magnetic flux drive mechanism includes a driving device and a pair of transmission shafts 57. The pair of transmission shafts 57 are coaxially disposed and rotatably mounted in the first mounting space and the second mounting space, respectively. In the present embodiment, the end of the transmission shaft 57 close to the first housing 54 realizes relative rotation with the first housing 54 through a rotating assembly 512. The transmission shaft 57 is rotatably connected with the rotating assembly 512, with the rotation direction being about the axial direction of the transmission shaft 57, and the rotating assembly 512 is sleeved on the transmission shaft 57. The end of the transmission shaft 57 close to the central housing 55 realizes relative rotation with the central housing 55 via a copper cap 20. The transmission shaft 57 is rotatably connected with the copper cap 20, with the rotation direction being about the axial direction of the transmission shaft 57. The transmission shaft 57 is coaxially arranged with the impeller 53 and fixed to each other. Since the pair of impellers 53 are arranged face-to-face in the present embodiment, the driving device is mounted on the central housing 55 and sleeved on the pair of transmission shafts 57, respectively. The driving device can independently drive the pair of transmission shafts 57 to rotate respectively, thereby driving the pair of impellers 53 to rotate respectively.

Optionally, the driving device includes two drive units, which are respectively configured to drive the pair of transmission shafts 57. The drive unit includes:
a circuit board 58;
a hollow coil 59, wherein the hollow coil 59 is mounted on the circuit board 58 and sleeved on the corresponding transmission shaft 57, and the hollow coil 59 is electrically connected to the circuit board 58; and
a rotating magnet 510, wherein the rotating magnet 510 is disposed on the side of the hollow coil 59 away from the circuit board 58, and the rotating magnet 510 is sleeved on the corresponding transmission shaft 57 and is fixed to the transmission shaft 57.

In the present embodiment, the driving device includes two drive units, and each drive unit includes one circuit board 58, one hollow coil 59 and one rotating magnet 510. In the present embodiment, the circuit board 58 is sleeved outside the rotating assembly 512, and further sleeved on the transmission shaft 57. The hollow coil 59 is mounted on the circuit board 58 and electrically connected thereto, and is arranged on the side of the circuit board 58 close to the central housing 55. The hollow coil 59 is also sleeved outside the rotating assembly 512. The rotating magnet 510 is disposed on the side of the hollow coil 59 close to the central housing 55 and sleeved on the transmission shaft 57, and is fixedly connected to the transmission shaft 57 via a rotor frame 516, wherein the rotor frame 516 is shown in the drawings of the present embodiment. After the circuit board 58 controls the hollow coil 59 to be energized, the magnetic field generated by the hollow coil 59 drives the rotating magnet 510 to rotate about the axis of the transmission shaft 57, so as to realize the driving effect of axial magnetic flux, thereby driving the transmission shaft 57 and the impeller 53 to rotate. In the present embodiment, the rotating magnet 510 may be selected as a neodymium iron boron magnet. In the present embodiment, the reason why the hollow coil 59 is selected for driving is that the cooperation between the hollow coil 59 and the rotating magnet 510 is used to achieve the purpose of axial magnetic flux driving. In the present embodiment, the two sets of hollow coils 59 are controlled by two circuit boards 58, and the power supply and power cutoff of the two hollow coils 59 do not affect each other.

Optionally, the rotating assembly 512 includes:
a copper middle tube 513, which is coaxially disposed with the transmission shaft 57, and the copper middle tube 513 is hollow inside with both ends communicating;
a pair of bearings 514, which are disposed inside the copper middle tube 513 and sleeved on the transmission shaft 57, and the inner rings of the bearings 514 are fixedly connected to the side wall of the transmission shaft 57.

Optionally, the rotating assembly 512 includes a copper middle tube 513 and a pair of bearings 514. The copper middle tube 513 is hollow inside with both ends communicating. The pair of bearings 514 are mounted inside the copper middle tube 513 and distributed near the two ends of the copper middle tube 513. The outer rings of the bearings 514 are snap-fitted inside the copper middle tube 513, and the inner rings of the bearings 514 are sleeved on the transmission shaft 57 and fixed thereto. In the present embodiment, the copper middle tube 513 is fixedly mounted on the first housing 54. By providing the rotating assembly 512, the rotational friction resistance between the transmission shaft 57 and the first housing 54 is reduced, and the rotation efficiency is improved. The transmission shaft 57 is also connected to the copper middle tube 513 via a C-shaped retaining ring 519.

Optionally, the rotating assembly 512 further includes a preloading elastic member 515, which is disposed between the pair of bearings 514. The preloading elastic member 515 presses the bearings 514 to eliminate the clearance between the balls and the inner and outer rings of the bearings 514.

Optionally, the inner ring of the bearing 514 close to the copper cap 20 in the copper middle tube 513 abuts against the copper cap 20. A circle of protrusions 521 is provided inside the copper middle tube 513 at a position near the copper cap 20, and the protrusions 521 abut against the outer ring of the bearing 514 near the copper cap 20, with the protrusions 521 being elastic; the inner ring of the bearing 514 away from the copper cap 20 inside the copper middle tube 513 abuts against the C-shaped retaining ring 519. The preloading elastic member 515 is telescopic along the extending direction of the transmission shaft 57. Optionally, the preloading elastic member 515 is a spring. One end of the preloading elastic member 515 abuts against the outer ring of the bearing 514 away from the copper cap 20, and the other end abuts against the protrusions 521. The preloading elastic member 515 is compressed inside the copper middle tube 513, so that the preloading elastic member 515 exerts pressure on both ends respectively, thereby causing the inner rings and outer rings of the two bearings 514 to be misaligned with each other, reducing the clearance between the balls and the inner and outer rings in the bearings 514, ensuring that the balls in the bearings 514 can effectively contact the inner and outer rings, and achieving the purpose of low vibration and low noise.

The foregoing description is merely of preferred embodiments of the present application and an explanation of the technical principles employed. Those skilled in the art should understand that the scope of protection involved in the present application is not limited to technical solutions formed by the specific combination of the above technical features, but also covers other technical solutions formed by any combination of the above technical features or their equivalent features without departing from the inventive concept of the present application. For example, technical solutions formed by substituting the above features with (but not limited to) technical features disclosed in this application that have similar functions.

### INDUSTRIAL PRACTICALITY

The present application achieves the effect of switching between an air suction mode and an air blowing mode for a single air opening by integrally mounting two fan assemblies together and controlling the two fan assemblies to operate respectively. The above approach features a simple internal structural design and is less prone to air leakage. Meanwhile, no additional switching motor is required, which reduces the space occupied by motor mounting and lowers the overall weight of the structure. Furthermore, sufficient gas flow is provided, thereby producing a favorable ventilation effect.

## Claims

1. A stacked fan structure, **characterized by** comprising
a first fan assembly (1), wherein the first fan assembly (1) is provided with a first air opening (3) and has a first space in an interior of the first fan assembly (1), and the first space is in communication with the first air opening (3);
a second fan assembly (2), wherein the second fan assembly (2) is provided with a second air opening (4) and has a second space in an interior of the second fan assembly (2), and the second space is in communication with the second air opening (4);
wherein the first fan assembly (1) and the second fan assembly (2) are connected to each other, and the first space is in communication with the second space;
when the first fan assembly (1) operates actively and the second fan assembly (2) is not active, the second air opening (4) serves as an air suction opening and the first air opening (3) serves as an air blowing opening, and the air flows sequentially through the second air opening (4), the second space, the first space and the first air opening (3); and
when the second fan assembly (2) operates actively and the first fan assembly (1) is not active, the first air opening (3) serves as an air suction opening and the second air opening (4) serves as an air blowing opening, and the air flows sequentially through the first air opening (3), the first space, the second space and the second air opening (4).

2. The stacked fan structure according to claim 1, wherein
the first fan assembly (1) comprises a first housing (9) and a second housing (10), and the first space is formed between the first housing (9) and the second housing (10);
the second fan assembly (2) comprises a third housing (11) and a fourth housing (12), and the second space is formed between the third housing (11) and the fourth housing (12);
the second housing (10) and the third housing (11) are connected by a connecting structure;
a first communication hole is provided in each of a side of the second housing (10) near the third housing (11) and a side of the third housing (11) near the second housing (10), and the connecting structure communicates the two first communication holes and is configured to communicate the first space with the second space.

3. The stacked fan structure according to claim 2, wherein the connecting structure comprises a communication tube (5), and the communication tube (5) communicates the first space with the second space.

4. The stacked fan structure according to any one of claims 1 to 3, wherein
the first fan assembly (1) comprises a fifth housing (13), and the second fan assembly (2) comprises a seventh housing (14);
a sixth housing (6) is mounted between the fifth housing (13) and the seventh housing (14), the first space is defined between the sixth housing (6) and the fifth housing (13), the second space is formed between the sixth housing (6) and the seventh housing (14),
wherein a second communication hole is formed in the sixth housing (6) and configured to communicate the first space with the second space.

5. The stacked fan structure according to claim 4, wherein connecting members (7) are mounted between the sixth housing (6) and each of the first fan assembly (1) and the second fan assembly (2), and are configured to fix the first fan assembly (1), the second fan assembly (2) and the sixth housing (6).

6. The stacked fan structure according to claim 5, wherein a first protruding portion (20) is provided on the sixth housing (6), wherein a diameter of the fifth housing (13) is larger than that of the seventh housing (14), and a diameter of the first protruding portion (20) is greater than or equal to that of the fifth housing (13), wherein a connecting space is formed between the first protruding portion (20) and the fifth housing (13), and is configured to connect with an air guide layer (15).

7. The stacked fan structure according to any one of claims 2 to 6, wherein the connecting structure comprises a sealing ring and a fixing structure, wherein the first fan assembly (1) and the second fan assembly (2) are fixed to each other by the fixing structure, and a gap between the first fan assembly (1) and the second fan assembly (2) is sealed by the sealing ring.

8. The stacked fan structure according to any one of claims 1 to 7, wherein the first fan assembly (1) comprises a first impeller, and the second fan assembly (2) comprises a second impeller, wherein the first impeller and the second impeller each comprise fan blades (16), and at least one of dimensions of the first impeller and the second impeller, or lengths, thicknesses and inclination angles of the fan blades (16) on the first impeller and the second impeller is different.

9. The stacked fan structure according to any one of claims 1 to 8, wherein the first fan assembly (1) and the second fan assembly (2) share a circuit board.

10. The stacked fan structure according to claim 9, wherein a stator of the first fan assembly (1) and a stator of the second fan assembly (2) are arranged in a staggered manner.

11. A combined blade-integrated fan with bidirectional asymmetric impellers, configured for a ventilation system of an automotive seat, **characterized by** comprising:
a housing assembly (31), wherein the housing assembly (31) defines a first space and a second space in communication with each other in an interior of the housing assembly (31), a first air exchange opening (33) and a second air exchange opening (32) are provided on the housing assembly (31), the first space is in communication with the first air exchange opening (33), and the second space is in communication with the second air exchange opening (32); and
a first blade fan assembly (35) and a second blade fan assembly (34), wherein the first blade fan assembly (35) is mounted in the first space, the second blade fan assembly (34) is mounted in the second space, and the first blade fan assembly (35) and the second blade fan assembly (34) operate independently from each other;
in response to the first blade fan assembly (35) actively operating, air flows from a side of the automotive seat near an occupant, through the second air exchange opening (32), the second space, the first space and the first air exchange opening (33), to a side of the automotive seat away from the occupant;
in response to the second blade fan assembly (34) actively operating, air flows from the side of the automotive seat away from the occupant, through the first air exchange opening (33), the first space, the second space and the second air exchange opening (32), to the side of the automotive seat near the occupant;
wherein the first blade fan assembly (35) comprises a first impeller (37), the second blade fan assembly (34) comprises a second impeller (36);
the first impeller (37) and the second impeller (36) have different thicknesses along a direction in which rotating shafts of the first impeller (37) and the second impeller (36) extend.

12. The combined blade-integrated fan with bidirectional asymmetric impellers according to claim 11, wherein the thickness of the first impeller (37) along the direction in which the rotating shaft of the first impeller (37) extends is greater than that of the second impeller (36) along the direction in which the rotating shaft of the second impeller (36) extends.

13. The combined blade-integrated fan with bidirectional asymmetric impellers according to claim 11 or 12, wherein a length of the first impeller (37) in a direction perpendicular to the rotating shaft of the first impeller (37) is smaller than that of the second impeller (36) in a direction perpendicular to the rotating shaft of the second impeller (36).

14. The combined blade-integrated fan with bidirectional asymmetric impellers according to any one of claims 11 to 13, wherein both the second impeller (36) and the first impeller (37) are of a blade centrifugal structure, and the second impeller (36) and the first impeller (37) drive air to move in opposite directions when rotating, and both the second air exchange opening (32) and the first air exchange opening (33) are located at a side wall of the housing assembly (31).

15. The combined blade-integrated fan with bidirectional asymmetric impellers according to any one of claims 11 to 14, wherein the housing assembly (31) comprises:
an upper housing (313), a middle housing (314) and a lower housing (315) that are connected to each other, wherein the first space is formed between the upper housing (313) and the middle housing (314), and the second space is formed between the middle housing (314) and the lower housing (315).

16. The combined blade-integrated fan with bidirectional asymmetric impellers according to claim 5, wherein a second protruding portion (38) is provided on an outer side wall of the middle housing (314), and the second protruding portion (38) is configured to connect with a support layer (39) to fix a relative position between the housing assembly (31) and the support layer (39).

17. The combined blade-integrated fan with bidirectional asymmetric impellers according to claim 6, wherein a diameter of the lower housing (315) is larger than that of the upper housing (313), and a diameter of the second protruding portion (38) is greater than or equal to that of the lower housing (315), a connecting space is formed between the second protruding portion (38) and the lower housing (315) and configured to connect with an air guide layer (311) to fix a relative position between the housing assembly (31) and the air guide layer (311).

18. An automotive seat ventilation system, **characterized by** comprising
the combined blade-integrated fan with bidirectional asymmetric impellers according to any one of claims 11 to 17;
a support layer (39), wherein a ventilation air duct (316) is formed on the support layer (39), the ventilation air duct (316) is configured to communicate a space on the side of the support layer (39) near the occupant and a space on the side away from the occupant, wherein an air guide portion is arranged on the side of the support layer (39) away from the occupant, the housing assembly (31) is connected with the air guide portion, and the second air exchange opening (32) is in communication with an internal space of the air guide portion.

19. The automotive seat ventilation system according to claim 18, wherein the air guide portion comprises an air guide layer (311) and an air bag film (312), with the air bag film (312) covering the air guide layer (311), wherein a mounting groove (310) is provided in the air guide layer (311), the housing assembly (31) is disposed in the mounting groove (310), and the second air exchange opening (32) is in communication with an internal space of the air guide layer (311), wherein a ventilation hole is provided on a side of the air bag film (312) near the support layer (39), and the ventilation hole is in corresponding communication with the ventilation air duct (316), and wherein a first mounting hole is provided on a side of the air bag film (312) away from the support layer (39), the first mounting hole corresponding to the mounting groove (310) and being configured to accommodate the housing assembly (31).

20. The automotive seat ventilation system according to claim 18 or 19, wherein the air guide portion comprises an air guide groove, the air guide groove being in communication with the ventilation air duct (316), wherein a sealing layer is provided on a side of the air guide groove away from the support layer (39), and a second mounting hole is formed in the sealing layer, and wherein the housing assembly (31) passes through the second mounting hole and is disposed in the air guide groove, and the second air exchange opening (32) is in communication with an internal space formed by the air guide groove and the sealing layer.
